# EUROPEAN PATENT APPLICATION

(11) **EP 1 919 109 A2**
(43) Date of publication of application: **07.05.2008**
(21) Application number: 07118595.3
(22) Date of filing: 16.10.2007
(51) Int. Cl.: H04H 40/18

(54) **Method for displaying broadcast-related information in mobile terminal capable of broadcast reception and mobile terminal for implementing the method**

(30) Priority: 26.10.2006 KR 20060104664
(71) Applicant: LG Electronics Inc., Yeongdeungpo-gu Seoul 150-721 (KR)
(72) Inventor: Yoon, Sang-Mi, Heungdeok-Gu, Cheongju, Chungcheongbuk-Do (KR)
(74) Representative: Cabinet Plasseraud

(57) **Abstract**

A method for displaying broadcast-related information and a mobile terminal capable of receiving broadcasting implementing the same, are discussed. According to an embodiment, the method for displaying broadcast-related information, in a mobile terminal capable of being operated in a broadcast receiving mode and a normal mode comprises: checking broadcast-related information when entering the normal mode, and displaying the checked broadcast-related information on a screen display in the normal mode.

## Description

This application claims the priority benefit of Korean Patent Application No. 10-2006-0104664, filed on October 26, 2006, which is hereby incorporated by reference for all purposes as if fully set forth herein.

### BACKGROUND OF THE INVENTION

### 1. Field of the Invention

The present invention relates to a method for displaying broadcast-related information in a mobile terminal capable of broadcast reception and to a mobile terminal implementing such method.

### 2. Description of the Background Art

As broadcasting and telecommunications technologies have recently made rapid progress, mobile terminals which enable users to watch a multimedia broadcast without being limited by location are gaining popularity. In particular, with the advent of digital multimedia broadcasting (DMB), broadcasting of high-definition and high sound quality contents has been implemented. Accordingly, more users desire to watch broadcasts via their mobile terminals.

One type of mobile terminals capable of receiving broadcasts, which is most widely used, is a mobile terminal provided with a broadcast receiving module. The mobile terminal having the broadcast receiving module provides a broadcast receiving function as well as general functions, such as voice communication, data communication, and the like.

When the mobile terminal capable of receiving broadcasts operates in a standby mode, a variety of status information of the mobile terminal (hereinafter, referred to as "status information") are displayed on a certain area of a standby mode screen display of the mobile terminal in the form of certain indicators so that they can be easily recognized by a user. Here, the status information signifies a variety of information for showing the operational status of the mobile terminal, such as the received signal strength, remaining capacity of a battery, message reception, alarm setting, and the like. And the certain area of the display screen signifies an area allocated for displaying the certain indicators associated with the status information among the entire screen display.

Further, if the user enters a request for receiving a broadcast, the mobile terminal enters (changes to) a broadcast receiving mode and checks broadcast-related information such as the received broadcast signal strength. Then, status indicators associated with the checked broadcast-related information are displayed on the broadcast receiving mode screen display. Accordingly, after entering the request for receiving the broadcast, the user may check whether the broadcast can be received at the current location.

However, with such a mobile terminal, there is a problem in that the user must first place the mobile terminal into the broadcast reception mode in order to check the availability of broadcast reception, because the indication about the broadcast reception-related information is only displayed when the mobile terminal is in the broadcast receiving mode and is not available when the mobile terminal is operating in a normal or standby mode. This need to convert the operating mode of the mobile terminal wastes power and is inconvenience to the users.

### SUMMARY OF THE INVENTION

Therefore, it is an object of the present invention to provide a method for displaying broadcast-related information on a display screen of a mobile terminal operating in its normal operational mode by obtaining broadcast-related information even while a mobile terminal capable of receiving a broadcast is being operated in its normal operational mode, and a mobile terminal capable of receiving a broadcast adopting the same.

It is another object of the present invention to provide a mobile terminal and a method for controlling a display of broadcast-related information on a screen of the mobile terminal, which address the limitations and disadvantages associated with the related art.

According to an embodiment, the present invention provides a method for displaying broadcast-related information, in a mobile terminal capable of being operated in at least one of a broadcast-receiving mode and a normal mode, the method comprising: checking broadcast-related information when entering the normal mode; and displaying the checked broadcast-related information on a screen display of the mobile terminal in the normal mode.

According to another embodiment, the present invention provides A mobile terminal capable of receiving a broadcast and capable of being operated in at least one of a broadcast receiving mode and a normal mode, the mobile terminal comprising: a broadcast receiving module configured to receive a broadcast; a display configured to display broadcast data received through the broadcast receiving module when in the broadcast receiving mode, and to display a normal mode screen display when in the normal mode; and a controller configured to check broadcast-related information when entering the normal mode and to display the checked broadcast-related information on the screen display in the normal mode.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.
In the drawings:

Figure 1 is a schematic block diagram showing functional elements of a mobile terminal capable of receiving a broadcast according to one embodiment of the present invention;

Figures 2a through 2d are respective exemplary views of a display screen of a mobile terminal displaying broadcast-related information according to one embodiment of the present invention;

Figures 3a and 3b are respective exemplary views of a display screen of a mobile terminal displaying broadcast-related information based on an operational mode of the mobile terminal according to one embodiment of the present invention;

Figure 4 is a flowchart for explaining a method for displaying broadcast-related information in a mobile terminal according to one embodiment of the present invention;

Figure 5 is a flowchart for explaining the steps of a subroutine for displaying broadcast-related information when a received broadcast signal strength is to be included in the displayed broadcast-related information according to an embodiment of the present invention; and

Figure 6 is a flowchart for explaining the steps of a subroutine for entering (changing) a broadcast receiving mode when a received broadcast signal strength of a second channel is indicated according to an embodiment of the present invention.

### DETAILED DESCRIPTION OF THE PREFERRED EMBODIMENTS

Description will now be given in detail of preferred embodiments of the present invention, examples of which are illustrated in the accompanying drawings.

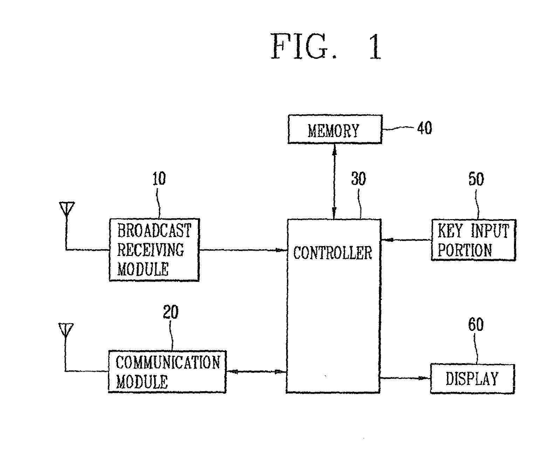

Figure 1 is a schematic block diagram showing functional elements of a mobile terminal capable of receiving a broadcast according to one embodiment of the present invention. The term "broadcast receiving mode" as described in this specification signifies an operating mode of a mobile terminal wherein a received broadcast image is being displayed on the mobile terminal in real-time. Other operational modes of the mobile terminal, other than the broadcast receiving mode, e.g., a standby state and a calling state, can be defined as a "normal mode". Examples of a broadcast include, but are not limited to, TV programs, movies, news, music, texts, etc. The mobile terminal can be a mobile phone device, a PDA device, a smart device, a computer notebook, etc.

Referring to Fig. 1, the mobile terminal capable of receiving a broadcast according to the present invention includes a broadcast receiving module 10, a communication module 20, a controller 30, a memory or storage unit 40, a key input portion 50 and a display 60. The display 60 can be one or display units such as LCD panels, OLED panels, etc. The mobile terminal can include other known components and/or functions such as a speaker, a camera, etc. All components of the mobile terminal are operatively coupled and configured.

The broadcast receiving module 10 is a device/unit for receiving a broadcast from a broadcast network or other communication network. In the present invention, when the mobile terminal enters (changes to) the normal mode, the strength of the received broadcast signal may be checked by operating the broadcast receiving module 10.

In this case, the strength of the received broadcast signal is simply checked without performing a process of decoding broadcast data which is necessary so as for the broadcast data to be displayed as an image. Accordingly, power consumption is reduced in the present invention, compared to when the strength of the received broadcast signal is checked in the broadcast receiving mode.

The communication module 20 is a device/unit for sending and receiving data through a mobile communication network or other network. Accordingly, data such as voice, text, moving image, etc. can be sent and received through the communication module 20.

When the mobile terminal enters the normal mode, an operation control program executing in the controller 30 (hereinafter, referred to simply as the "controller 30") checks broadcast-related information and reads an indicator associated with the broadcast-related information from the memory 40 so as to output status information to the display 60. Here, the controller 30 outputs the broadcast-related status information, together with the normal mode-related status information, such as received signal strength, message reception, alarm setting, and the like.

Here, the broadcast-related information may include a variety of information related to a broadcast receiving mode - including, but not limited to, received broadcast signal strength, receivable broadcast channel information, scheduled recording information, scheduled viewing information, etc. And, the indicator is formatted to enable a user to easily recognize the broadcast-related information and status information displayed on a display screen. For instance, information, such as the received broadcast signal strength and message reception, may be displayed on the screen iconically, such as in the form of a television icon or an envelope icon. Other forms of indicating the broadcast-related information and status information may be used to display or audibly output the information to the user.

In particular, when the strength of the received broadcast signal among the broadcast-related information is to be displayed, the controller 30 operates the broadcast receiving module 10 to check the strength of the received broadcast signal of a first channel. The first channel may be the channel that has last been watched or a channel that is designated by the user.

Preferably, if the strength of the received broadcast signal of the first channel is less than a broadcast-receivable reference signal strength, a strength of a received broadcast signal of a second channel is checked and displayed. The second channel is one of the broadcast channels which can be received by the mobile terminal. If a certain channel cannot be received, a typical user may wish to view another available channel. Considering this need, preferably it is required to check the strength of the received broadcast signal of the second channel in case the first channel cannot be received. The second channel signifies one or more additional channels which can optionally be designated by the user. However, if additional channels are not designated, the second channel can be selected by reversely searching the channels which the user has last watched or by sequentially searching the user's channel preference list, thus to check the strength of the received broadcast signal of the selected second channel. Preferably, if a request for entering the broadcast receiving mode is made while the strength of the received broadcast signal of the second channel is being displayed, the controller 30 controls the broadcast receiving module 10 to receive the broadcast of the second channel.

To reduce power consumption caused by checking the strength of the received broadcast signal, the controller 30 operates the broadcast receiving module 10 only when the display 60 is turned on, and then renews the strength of the received broadcast signal. And, the controller 30 stops the operation of the broadcast receiving module 10 when a user selects a menu (i.e., a menu selection event occurs). The menu selection event indicates a case where a user selects another menu while the user is checking an original screen display in the normal mode, on which broadcast-related information is displayed. The menu is restricted to menus which can be selected in the normal mode. Since the user does not need to pay attention to the broadcast-related information anymore, the operation of the broadcast receiving module 10 is stopped, thereby reducing power consumption.

Further, the controller 30 may rearrange and output the indicators associated with the checked broadcast-related information and status information based on the operational mode of the mobile terminal. In addition, the controller 30 may change and output the size and color of the indicators related to the operational mode.

The memory 40 is a device/unit for storing basic information related to the mobile terminal and data required for its operation. The memory 40 can store information related to the broadcast receiving mode, such as receivable broadcast channel information, scheduled recording information, scheduled viewing information, and the like. In addition, the memory 40 stores the indicators (or data for outputting the indicators) associated with the broadcast-related information and status information related to the normal mode.

The key input portion 50 is an input device/unit provided with various keys, buttons, pads, etc. which may include a Num Lock key, a function key, etc. to enable the inputting of various commands by a user. The key input portion 50 may include a touch sensitive area, which can be provided as part of the display 60.

The display 60 is a device/unit for displaying a variety of information. The display 60 displays broadcast data received through the broadcast receiving module 10 and/or displays the operational status of the mobile terminal and its result on a display screen.

In particular, according to the present invention, the broadcast-related information is displayed on the screen in the normal mode, together with the status information. Here, the screen display in a normal mode can be a game screen display, a multimedia image screen display, a calling mode screen display as well as a standby mode screen display.

Here, the broadcast-related information and the status information are displayed on one or more certain areas of the screen of the display 60 in the form of indicators. The certain area is an area allocated among the entire screen so as to display indicator(s) showing the broadcast-related information and/or status information.

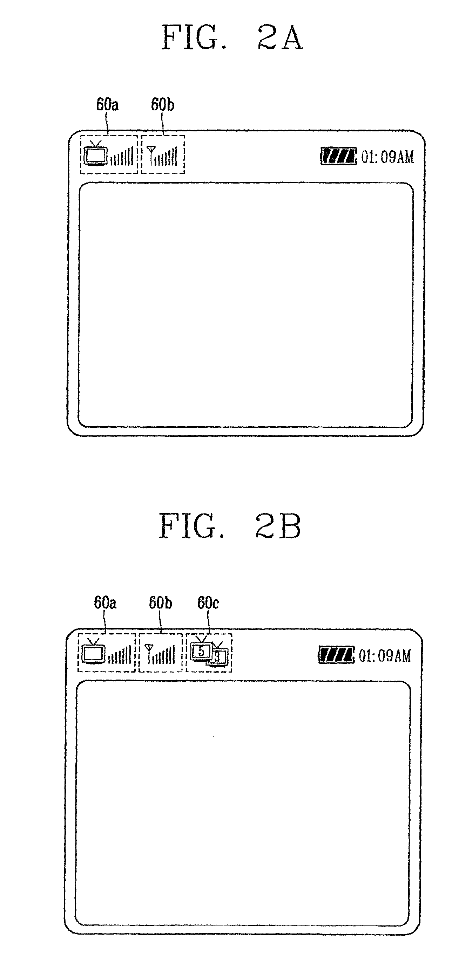

Figures 2a through 2d are examples of views of a display screen of the mobile terminal displaying broadcast-related information according to one embodiment of the present invention. Here, the mobile terminal is the mobile terminal of Fig. 1, but can be other types of mobile terminals.

Referring to Fig. 2a, the display of the strength of the received broadcast signal 60a can be shown as an indicator, similar to the display of the strength of a received signal 60b. Here, the display of the received broadcast signal strength 60a is represented as a bar graph and the number of the bars is proportional to the received broadcast signal strength. However, this representation is only example, and may include a numerical figure corresponding to the value, or a character, in addition to the bar shape.

As shown in Fig. 2b, in addition to the display of the received broadcast signal strength 60a, indication of the scheduled recording information 60c (e.g., the number of recordings scheduled or the number of recordings completed) can also be displayed on the screen of the mobile terminal.

Figure 2c shows an indication of receivable broadcast channels 60d, which are those broadcast channels that can be received by the mobile terminal. In some cases, whether a broadcast channel can be received at a current location can be checked. Based on the checked result, the indication of the channel that can be received at the current location can be displayed in a different color or form.

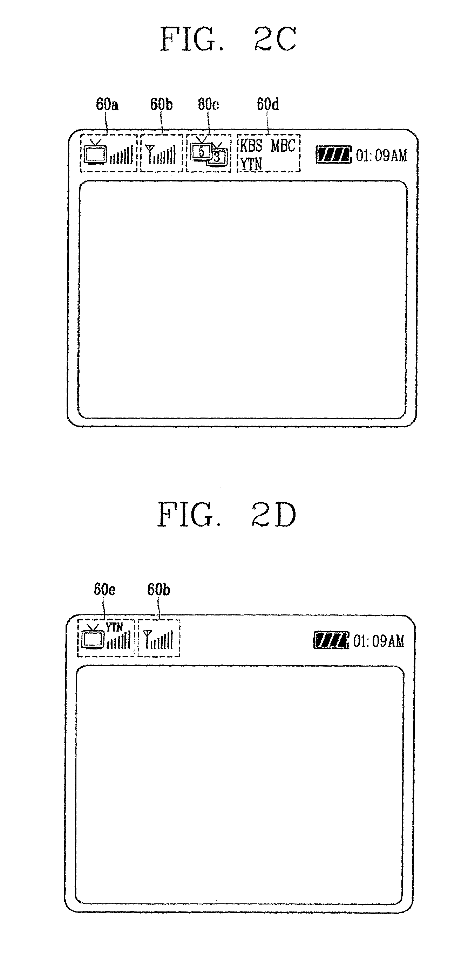

Figure 2d is an exemplary view of a screen display when the strength of the received broadcast signal of the first channel is less than a reference broadcast receivable signal strength. When the received broadcast signal strength of the first channel is less than the reference signal strength, an indication of the strength of the received broadcast signal of a second channel, which is greater than the reference signal strength, is displayed on the screen of the mobile terminal. In this case, it is preferable to display an indication of the second channel 60e, of which the received broadcast signal strength has been already checked, with its name or call letters such that a user may easily recognize it. In addition to displaying the channel indication with its name, other various types of display formats can be implemented as long as the user can notice thereby that the indication of the received broadcast signal strength of the second channel, not of the first channel, is being displayed on the screen of the mobile terminal.

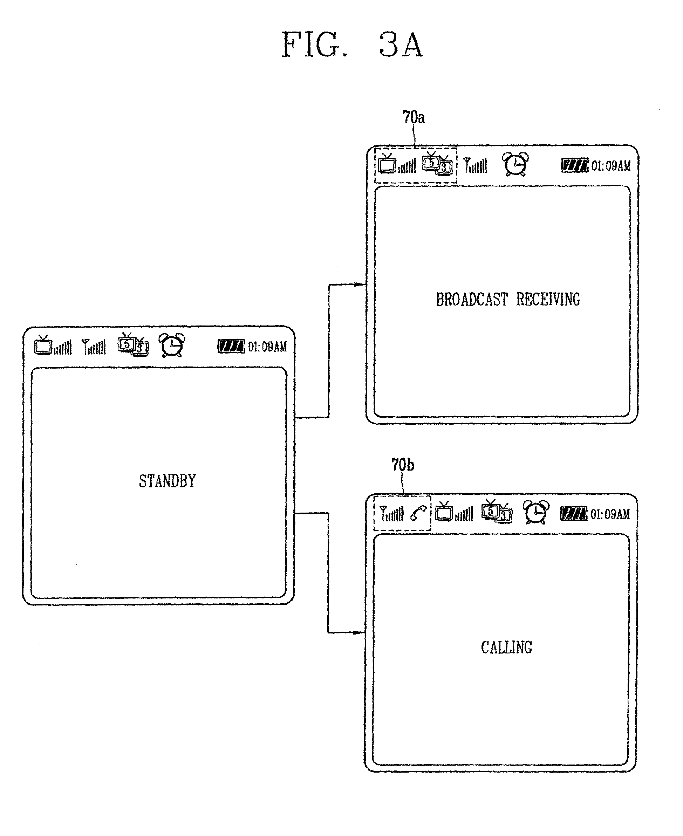

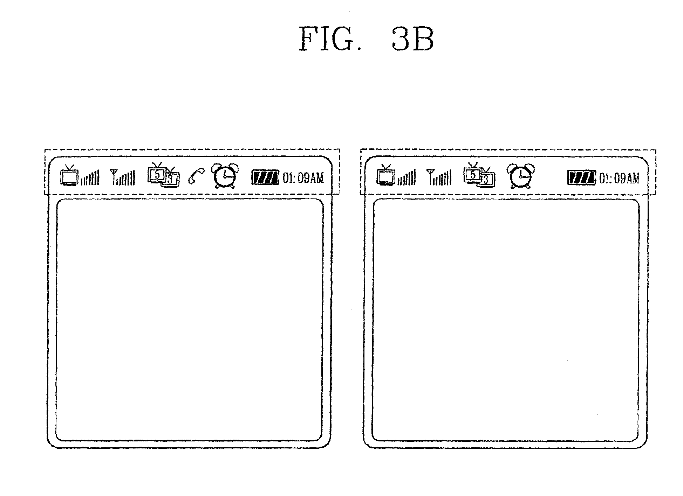

Figures 3a and 3b are examples of views of a display screen of a mobile terminal displaying broadcast-related information based on the operational mode of the mobile terminal according to an embodiment of the present invention. Here, the mobile terminal is the mobile terminal of Fig. 1, but can be other types of mobile terminals.

Referring to Fig. 3a, when the mobile terminal enters the broadcast receiving mode (e.g., from the standby mode), the controller 30 rearranges the location of the indicators on the basis of those indicators 70a associated with the checked broadcast-related information. For instance, as shown in Fig. 3a, the indicators 70a related to the broadcast receiving mode are displayed first from the far left with the positional priority given them over the normal mode (other) indicators. Then, the indicators related to the normal mode are sequentially disposed to the right thereof.

Further, when the mobile terminal is in a calling state of the normal mode, the controller 30 gives positional priority to those indicators 70b related to the calling state and then rearranges the indicators 70b according to the given positional priority. Accordingly, the indicators related to the calling state among the indicators related to the normal mode are disposed at the very far left of the screen. Here, since a user does not need to pay attention to the broadcast-related information during a call, the indicators showing the broadcast-related information can be selectively displayed.

The above examples refer to an embodiment wherein the indicators are arranged from left to right on the screen based on their priority. However, the indicators may also be arranged from right to left, or from top to bottom, or some other manner. Also, the indicators may be represented in different color and/or emphasis based on their priority to notify the user of their priority.

Referring to Fig. 3b, when the mobile terminal is in the broadcast receiving mode, the controller 30 may enlarge the size of the indicators related to the broadcast receiving mode by a certain ratio, or reduce the size of indicators related to the normal mode by a certain ratio.

Similarly, when the mobile terminal is in the calling mode, the size of those indicators related to the calling state can be enlarged by a certain ratio and the remaining indicators can be reduced in size by a certain ratio. In another example, the colors of the indicators may be selectively varied to emphasize to the user those indicators that are relevant to the current mode of the mobile terminal.

Thus, the visual effects according to the present invention can help a user to rapidly recognize the status information and broadcast-related information about the mobile terminal.

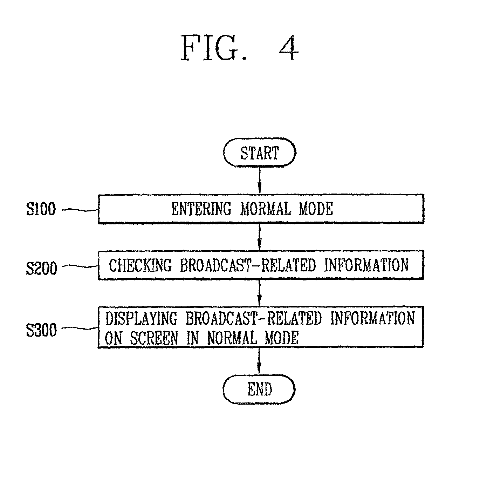

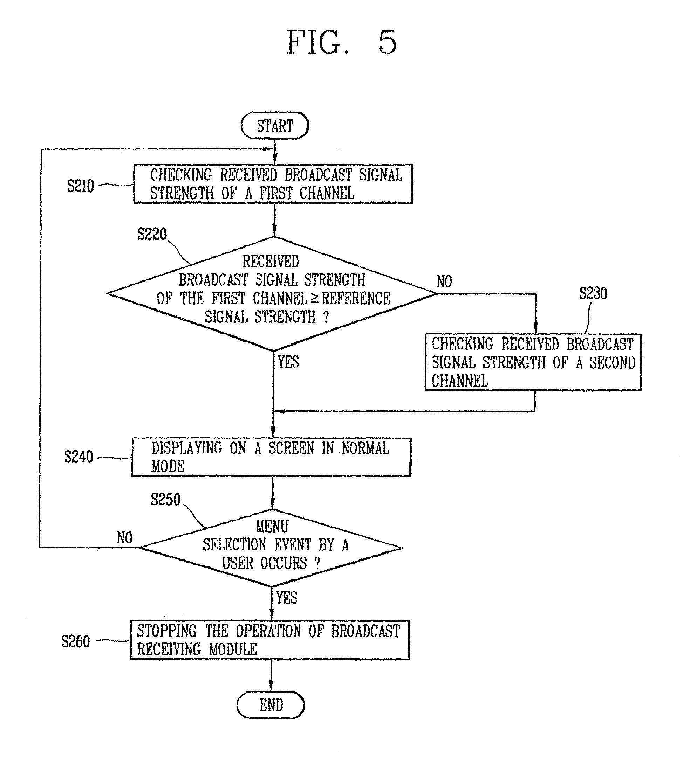

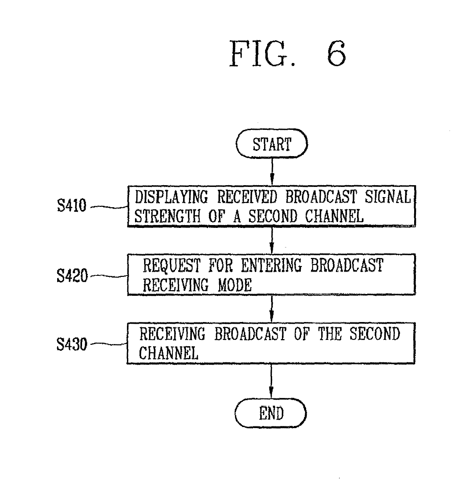

Figure 4 is a flowchart for explaining a method for displaying broadcast-related information in a mobile terminal according to one embodiment of the present invention. The methods of Fig. 4 and subsequent Figs. 5 and 6 are preferably implemented by the mobile terminal of Fig. 1, but can be implemented by other suitable device or system.

Referring to Fig. 4, after the mobile terminal enters (changes to) a normal mode at step S100, the controller 30 checks broadcast-related information at step S200. In this case, the broadcast-related information may include one or more of the received broadcast signal strength, receivable broadcast channels, scheduled recording information and scheduled viewing information, as mentioned above. If the received broadcast signal strength is included in the broadcast-related information, the controller 30 operates the broadcast receiving module 10 to check the strength of the received broadcast signal, which subroutine will be described with reference to the flowchart of Fig. 5. Receivable broadcast channels, scheduled recording information and scheduled viewing information can be checked with reference to information stored in the memory 40.

The controller 30 reads indicators associated with the checked broadcast-related information from the memory 40, and then displays the indicators on a display screen of the display 60 in the normal mode at step S300. Here, the controller 30 checks information related to the normal mode, and then displays the information together with the broadcast-related information on the screen of the display 60.

In addition, based on the operation mode of the mobile terminal, the controller 30 may rearrange the location of the indicators and/or adjust their sizes and/or colors thus to output the indicators to the display 60 appropriately. For instance, the operations shown in Figs. 2a to 3b may be utilized.

Figure 5 is a flowchart showing the steps of a subroutine for displaying broadcast-related information when the received broadcast signal strength is to be included among the displayed broadcast-related information.

First, the controller 30 operates the broadcast receiving module 10 and checks the strength of the received broadcast signal of the first channel at step S210. In this example, the first channel is the channel that has last been watched or that is designated by a user.

Next, if the received broadcast signal strength of the first channel is determined to be less than the reference signal strength at step S220, the controller 30 checks the strength of the received broadcast signal of a second channel at step S230. Since the received broadcast signal strength may be different by channels even in the same location, the controller 30 selects another channel, other than the first channel, and operates the broadcast receiving module 10. Accordingly, the strength of the received broadcast signal of the second channel can be checked.

Then, broadcast-related information is also displayed on the screen display of the mobile terminal in the normal mode at step S240. In addition, the broadcast-related information can be displayed in the form of indicators so as to be easily recognized by a user, e.g., as shown in Figs. 2a-3b. Further, as in step S230, if the received broadcast signal strength of the second channel has been checked, information to notify the user that the received broadcast signal strength of the second channel has been checked is also displayed on the screen of the mobile terminal.

Lastly, when a user selects a menu (e.g., a menu selection event by a user occurs) at step S250, the controller 30 stops the operation of the broadcast receiving module 10 at step S260. But, if the user does not select a menu (e.g., a menu selection event by a user does not occur), the controller 30 continues to operate the broadcast receiving module 10 to renew the received broadcast signal strength reading.

Figure 6 is a flowchart showing the steps of a subroutine for entering (requesting) the broadcast receiving mode when the received broadcast signal strength of a second channel is indicated.

As described above, if the received broadcast signal strength of the first channel is less than the reference signal strength, the received broadcast signal strength of a second channel is checked to be displayed on the screen display in the normal mode at step S410.

Further, when a request for entering the broadcast receiving mode is received through the key input portion 50 (e.g., by the user), the controller 30 controls the broadcast receiving module 10 to receive a broadcast of the second channel (or other requested channel) at step S430.

Accordingly, the present invention allows indicators associated with broadcast related information to be displayed on a screen of the mobile terminal in a non-broadcast mode of the mobile terminal. Such indicators can be represented to correspond with the current mode of the mobile terminal and with the priority of the information represented by the indicators.

The foregoing embodiments and advantages are merely exemplary and are not to be construed as limiting the present invention. This description is intended to be illustrative, and not to limit the scope of the claims. Many alternatives, modifications, and variations will be apparent to those skilled in the art.

As described above, the broadcast-related information can be easily checked even while the mobile terminal is being operated in a normal mode. In particular, since the received broadcast strength can be checked before changing to the broadcast receiving mode, a user may request to receive the broadcast only when the broadcast can be received, thereby reducing the power consumption caused by unnecessarily making a request for receiving the broadcast.

## Claims

1. A method for displaying broadcast-related information, in a mobile terminal capable of being operated in at least one of a broadcast-receiving mode and a normal mode, the method comprising:
checking broadcast-related information when entering the normal mode; and
displaying the checked broadcast-related information on a screen display of the mobile terminal in the normal mode.

2. The method of claim 1, wherein the broadcast-related information is displayed as one or more visible indicators.

3. The method of claim 2, wherein the screen display in the normal mode is a standby screen display, and the broadcast-related information is displayed together with status information related to the normal mode.

4. The method of claim 3, wherein displayed locations of the indicators associated with the broadcast-related information and the status information are rearranged, depending upon the operation mode of the mobile terminal.

5. The method of claim 3, wherein displayed sizes and/or colors of the indicators associated with information related to the current operation mode of the mobile terminal are changed.

6. The method of claim 1, wherein the broadcast-related information includes information of one or more of a received broadcast signal strength, a receivable broadcast channel, scheduled recording information and scheduled viewing information.

7. The method of claim 6, wherein if the received broadcast signal strength is included in the broadcast-related information, the method further comprises:
operating a broadcast receiving module of the mobile terminal to check the strength of a received broadcast signal of a first channel.

8. The method of claim 7, wherein the first channel is a channel that has last been watched or that is designated by a user.

9. The method of claim 7, wherein the step of operating the broadcast receiving module further comprises:
if the strength of the received broadcast signal of the first channel is less than a receivable broadcast reference signal strength, measuring the strength of a received broadcast signal of a second channel,
wherein the strength of the received broadcast signal of the second channel and information to notify that the second channel is selected are displayed on the screen display in the normal mode.

10. The method of claim 9, wherein the second channel is one among those broadcast channels which are receivable by the mobile terminal at its current location, other than the first channel.

11. The method of the claim 9, further comprising:
receiving a broadcast of the second channel if a request for entering the broadcast receiving mode is made while an indication of the strength of the received broadcast signal of the second channel is being displayed on the screen display.

12. The method of claim 7, wherein the broadcast receiving module operates while the screen display in the normal mode is being displayed, and renews the strength of the received broadcast signal.

13. The method of claim 12, wherein the operation of the broadcast receiving module is stopped if a user selects a menu while the normal mode screen display is being displayed.

14. A mobile terminal capable of receiving a broadcast and capable of being operated in at least one of a broadcast receiving mode and a normal mode, the mobile terminal comprising:
a broadcast receiving module configured to receive a broadcast;
a display configured to display broadcast data received through the broadcast receiving module when in the broadcast receiving mode, and to display a normal mode screen display when in the normal mode; and
a controller configured to check broadcast-related information when entering the normal mode and to display the checked broadcast-related information on the screen display in the normal mode.

15. The mobile terminal of claim 14, wherein the broadcast-related information is displayed as one or more visible indicators.

16. The mobile terminal of claim 15, wherein the screen display in the normal mode is a standby screen display, and the broadcast-related information is displayed together with status information related to the normal mode.

17. The mobile terminal of claim 16, wherein displayed locations of the indicators associated with the broadcast-related information and the status information are rearranged, depending upon the operation mode of the mobile terminal.

18. The mobile terminal of claim 16, wherein displayed sizes and/or colors of the indicators associated with information related to the operation mode of the mobile terminal are changed.

19. The mobile terminal of claim 14, wherein the broadcast-related information includes information of one or more of a received broadcast signal strength, receivable broadcast channels, a number of scheduled broadcast and a number of recorded broadcast.

20. The mobile terminal of claim 19, wherein when the received broadcast signal strength is included in the displayed broadcast-related information, the controller operates the broadcast receiving module and checks the strength of a received broadcast signal of a first channel.

21. The mobile terminal of claim 20, wherein the first channel is a channel that has last been watched or that is designated by a user.

22. The mobile terminal of claim 20, wherein if the strength of the received broadcast signal of the first channel is less than a receivable broadcast reference signal strength, the controller measures the strength of a received broadcast signal of a second channel through the broadcast receiving module, and displays an indication of the strength of the received broadcast signal of the second channel and information to notify that the second channel is selected on the screen display in the normal mode.

23. The mobile terminal of claim 22, wherein the second channel is one among those broadcast channels which are receivable by the mobile terminal, other than the first channel.

24. The mobile terminal of the claim 22, wherein the controller controls the broadcast receiving module to receive a broadcast of the second channel if a request for entering the broadcast receiving mode is made while an indication of the strength of the received broadcast signal strength of the second channel is being displayed.

25. The mobile terminal of claim 20, wherein the controller operates the broadcast receiving module while the screen display in the normal mode is being displayed, and renews the strength of the received broadcast signal.

26. The mobile terminal of claim 25, wherein the controller stops an operation of the broadcast receiving module if a user selects a menu while the normal mode screen display is being displayed on the display.
